(19) Europäisches Patentamt
European Patent Office
Office européen des brevets

(11) EP 1 118 635 B1

(12) EUROPÄISCHE PATENTSCHRIFT

(45) Veröffentlichungstag und Bekanntmachung des Hinweises auf die Patenterteilung:
**17.11.2004 Patentblatt 2004/47**

(51) Int Cl.[7]: **C08J 5/18**, C08L 67/02, C08J 3/22, C09K 21/00, C09K 21/12, C08K 5/5333

(21) Anmeldenummer: **01100063.5**

(22) Anmeldetag: **10.01.2001**

(54) **Transparente, schwerentflammbare, UV-stabile Folie aus einem kristallisierbaren Thermoplasten**

Tranparent, flame retardant, UV-stable film of a crystallisable thermoplastic material

Film transparent, peu inflammable, stable aux rayons UV d'un matériau thermoplastique crystallisable

(84) Benannte Vertragsstaaten:
**DE FR GB IT LU NL**

(30) Priorität: **20.01.2000 DE 10002171**

(43) Veröffentlichungstag der Anmeldung:
**25.07.2001 Patentblatt 2001/30**

(73) Patentinhaber: **Mitsubishi Polyester Film GmbH
65203 Wiesbaden (DE)**

(72) Erfinder:
- **Murschall, Ursula, Dr.
55283 Nierstein (DE)**
- **Crass, Günther
65232 Taunusstein (DE)**
- **Kern, Ulrich, Dr.
55218 Ingelheim (DE)**
- **Stopp, Andreas
55218 Ingelheim (DE)**

(74) Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(56) Entgegenhaltungen:
**DE-A- 4 129 980**
**DE-A- 19 630 599**
**US-A- 4 910 240**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine transparente, schwerentflammbare, UV-stabile, orientierte Folie aus einem kristallisierbaren Thermoplasten, deren Dicke im Bereich von 5 µm bis 300 µm liegt. Die Folie enthält mindestens ein Flammschutzmittel und einen UV-Stabilisator und zeichnet sich durch eine gute Verstreckbarkeit, durch sehr gute optische und mechanische Eigenschaften und durch eine wirtschaftliche Herstellung aus. Die Erfindung betrifft ferner ein Verfahren zur Herstellung dieser Folie und ihre Verwendung.

Transparente, orientierte Folien aus kristallisierbaren Thermoplasten mit einer Dicke von 1 bis 300 µm sind hinreichend bekannt.

Diese Folien enthalten weder UV-Stabilisator als Lichtschutzmittel noch Flammschutzmittel. Aus diesem Grund eignen sich weder die Folien noch die daraus hergestellten Artikel für Außenanwendungen, wo ein Brandschutz bzw. eine Schwerentflammbarkeit gefordert ist. Die Folien erfüllen nicht die Brandtests nach DIN 4102, Teil 2 und Teil 1, und auch nicht den UL-Test 94.

Bei Außenanwendungen zeigen die bekannten Folien bereits nach kurzer Zeit eine Vergilbung und eine Verschlechterung der mechanischen Eigenschaften infolge eines photooxidativen Abbaus durch Sonnenlicht.

In der EP-A-0 620 245 sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen. Ein Vorschlag, wie die UV-Stabilität solcher Folien zu verbessern wäre, ist dieser Schrift jedoch nicht zu entnehmen.

In der DE- A 23 46 787 ist ein schwerentflammbarer Kunststoff beschrieben. Neben dem Kunststoff als solchem ist auch seine Verwendung zur Herstellung von Folien und Fasern beansprucht.

Bei der Herstellung von Folien mit diesem, in der DE-A beanspruchten, phospholanmodifizierten Rohstoff zeigten sich folgende Defizite:

Der Kunststoff ist sehr hydrolyseempfindlich und muß sehr gut vorgetrocknet werden. Beim Trocknen mit Trocknern, die dem Stand der Technik entsprechen, verklebt der Kunststoff, so dass die Herstellung einer Folie, wenn überhaupt, nur unter schwierigsten Bedingungen gelingt. Die unter extremen und unwirtschaftlichen Bedingungen hergestellten Folien verspröden bei Temperaturbelastungen, d. h. die mechanischen Eigenschaften gehen aufgrund der schnell auftretenden Versprödung stark zurück, so dass die Folie technisch unbrauchbar ist. Bereits nach 48 Stunden Temperaturbelastung tritt diese Versprödung auf.

Aufgabe der vorliegenden Erfindung war es, eine transparente, flammhemmend ausgerüstete, UV-stabile, orientierte Folie mit einer Dicke im Bereich von 5 bis 300 µm bereitzustellen, die neben einer wirtschaftlichen Herstellung, einer guten Verstreckbarkeit und guten mechanischen sowie optischen Eigenschaften, vor allem eine flammhemmende Wirkung, keine Versprödung nach Temperaturbelastung und eine hohe UV-Stabilität aufweist.

Eine flammhemmende Wirkung bedeutet, dass die transparente Folie in einer sogenannten Brandschutzprüfung die Bedingungen nach DIN 4102, Teil 2, und insbesondere die Bedingungen nach DIN 4102, Teil 1, erfüllt und in die Baustoffklasse B 2, insbesondere B1, der schwer entflammbaren Stoffe eingeordnet werden kann.

Des Weiteren soll die Folie den UL-Test 94, den sogenannten "Vertical Burning Test for Flammability of Plastic Material", bestehen, so dass sie in die Klasse 94 VTM-0 eingestuft werden kann. Das bedeutet, dass die Folie 10 Sekunden nach Wegnahme des Bunsenbrenners nicht mehr brennt, dass nach 30 Sekunden kein Glühen mehr beobachtet wird und dass während der ganzen Zeit kein Abtropfen festgestellt wird.

Eine hohe UV-Stabilität bedeutet, dass die Folien durch Sonnenlicht oder andere UV-Strahlung nicht oder nur extrem wenig geschädigt werden, so dass sie sich für Außenanwendungen und/oder kritische Innenanwendungen eignen. Insbesondere sollen die Folien bei mehrjährigerAußenanwendungen nicht vergilben, keine Versprödungen oder Rißbildung der Oberfläche zeigen und auch keine Verschlechterung der mechanischen Eigenschaften aufweisen. Hohe UV-Stabilität bedeutet demnach, dass die Folie das UV-Licht absorbiert und Licht erst im sichtbaren Bereich hindurchtreten läßt.

Zu den geforderten guten optischen Eigenschaften zählten beispielsweise eine hohe Lichttransmission (≥ 84%), ein hoher Oberflächenglanz (≥ 120), eine extrem niedrige Trübung (≤ 20 %) sowie eine niedrige Gelbzahl (YID≤ 10).

Zu den guten mechanischen Eigenschaften zählt unter anderem eine hoher E-Modul ($E_{MD}$ > 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch ich Querrichtung hervorragend und ohne Abrisse orientieren läßt.

Zu der wirtschaftlichen Herstellung zählt, dass die Kunststoffe bzw. die Kunststoffkomponenten, die zur Herstellung der schwer entflammbaren Folie benötigt werden, mit Industrietrocknern, die dem Standard der Technik entsprechen, getrocknet werden können. Wesentlich ist, dass die Rohstoffe nicht verkleben und nicht thermisch abgebaut werden. Zu diesen Industrietrocknern nach dem Stand der Technik zählen Vakuumtrockner, Wirbelschichttrockner, Fließbetttrockner und Festbetttrockner (Schachttrockner). Diese Trockner arbeiten im Schnitt bei Temperaturen zwischen 100 und 170 °C, wo die flammhemmend ausgerüsteten Kunststoffe verkleben und bergmännisch abgebaut werden müssen, so dass keine Folienherstellung möglich ist.

Bei dem am schonensten trocknenden Vakuumtrockner durchläuft der Kunststoff einen Temperaturbereich von ca. 30°C bis 130 °C bei einem Vakuum von 50 mbar. Danach ist ein sogenanntes Nachtrocknen in einem Hopper bei Temperaturen von 100 bis 130 °C und einer Verweilzeit von 3 bis 6 Stunden erforderlich. Selbst dabei verklebt der bekannte Kunststoff extrem.

Keine Versprödungen bei kurzer Temperaturbelastung bedeutet, dass die Folie nach 100 Stunden Tempervorgang bei 100°C in einem Umluftofen keine Versprödung und keine schlechten mechanischen Eigenschaften aufweist.

Gelöst wird diese Aufgabe durch eine transparente Folie mit einer Dicke im Bereich 5 bis 300 μm, die als Hauptbestandteil einen kristallisierbaren Thermoplasten enthält und dadurch gekennzeichnet ist, dass die Folie mindestens einen UV-Stabilisator und ein Flammschutzmittel enthält, wobei mindestens das Flammschutzmittel erfindungsgemäß als Masterbatch dem kristallisierbaren Thermoplasten bei der Folienherstellung direkt zudosiert wird, vorzugsweise auch der UV-Stabilisator.

Die erfindungsgemäße transparente Folie enthält als Hauptbestandteil einen kristallisierbaren Thermoplasten. Geeignete kristallisierbare bzw. teilkristalline Thermoplasten sind beispielsweise Polyethylenterephthalat, Polybutylenterephthalat oder Polyethylennaphthalat, wobei Polyethylenterephthalat bevorzugt ist.

Erfindungsgemäß versteht man unter kristallisierbaren Thermoplasten kristallisierbare Homopolymere, kristallisierbare Copolymere, kristallisierbare Compounds, kristallisierbares Rezyklat und andere Variationen von kristallisierbaren Thermoplasten.

Die transparente Folie nach der vorliegenden Erfindung kann sowohl einschichtig als auch mehrschichtig sein. Die Folie kann ebenfalls mit diversen Copolyestern oder Haftvermittlern beschichtet sein.

Die transparente Folie enthält erfindungsgemäß neben dem kristallisierbaren Thermoplasten einen UV-Stabilisator und ein Flammschutzmittel. Das Flammschutzmittel wird dem kristallisierbaren Thermoplasten erfindungsgemäß über die sogenannte Masterbatch-Technologie direkt bei der Folienherstellung zudosiert, wobei die Konzentration an Flammschutzmittel in der fertigen Folie im Bereich zwischen 0,5 und 30 Gew.-%, vorzugsweise zwischen 1 und 20 Gew.-%, bezogen auf das Gewicht der Schicht des kristallisierbaren Thermoplasten, liegt.

Der UV-Stabilisator wird dem kristallisierbaren Thermoplasten zweckmäßigerweise ebenfalls über die sogenannte Masterbatch-Technologie direkt bei der Folienherstellung zudosiert, wobei die Konzentration des UV-Stabilisators in der fertigen Folie vorzugsweise im Bereich zwischen 0,01 Gew.-% und 5 Gew.-%, bezogen auf das Gewicht der Schicht des kristallisierbaren Thermoplasten, liegt.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflusst werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Folien ungeeignet, da sie zur Verfärbung oder Farbänderung führen. Für transparente, matte Folien sind nur organische und metallorganische Verbindungen geeignet, die dem zu stabilisierenden Thermoplasten keine oder nur eine extrem geringe Farbe oder Farbänderung verleihen, d. h. die in dem Thermoplasten löslich sind.

Im Sinne der vorliegenden Erfindung geeignete UV-Stabilisatoren als Lichtschutzmittel sind UV-Stabilisatoren, die mindestens 70 %, vorzugsweise 80 %, besonders bevorzugt 90%, des UV-Lichtes im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d. h. sich nicht zersetzen und nicht zur Ausgasung führen.

Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

Der oder die UV-Stabilisatoren sind vorzugsweise in der/den Deckschichten enthalten. Bei Bedarf kann auch die Kernschicht mit UV-Stabilisator ausgerüstet sein.

Es war völlig überraschend, dass der Einsatz der oben genannten UV-Stabilisatoren in Folien zu dem gewünschten Ergebnis führte. Der Fachmann hätte vermutlich zunächst versucht, eine gewisse UV-Stabilität über ein Antioxidanz zu erreichen, hätte jedoch bei Bewitterung festgestellt, dass die Folie schnell gelb wird.

Vor dem Hintergrund, dass UV-Stabilisatoren das UV-Licht absorbieren und somit Schutz bieten, hätte der Fachmann wohl handelsübliche Stabilisatoren eingesetzt. Dabei hätte er festgestellt, dass

- der UV-Stabilisator eine mangelnde thermische Stabilität hat und sich bei Temperaturen zwischen 200 °C und 240 °C zersetzt und ausgast;
- er große Mengen (ca. 10 bis 15 Gew.-%) UV-Stabilisator einarbeiten muß, damit das UV-Licht absorbiert wird und damit die Folie nicht geschädigt wird.

Bei diesen hohen Konzentrationen hätte er festgestellt, dass die Folie schon nach der Herstellung gelb ist, bei Gelbwertunterschieden (YID) um die 25. Des Weiteren hätte erfestgestellt, dass die mechanischen Eigenschaften negativ beeinflusst werden. Beim Verstrecken hätte er ungewöhnliche Probleme bekommen wie

- Abrisse wegen mangelnder Festigkeit, d. h. E-Modul zu niedrig;
- Düsenablagerungen, was zu Profilschwankungen führt;
- Walzenablagerungen vom UV-Stabilisator, was zu Beeinträchtigungen der optischen Eigenschaften (Klebedefekte, inhomogene Oberfläche) führt;
- Ablagerungen in Streck-, Fixierrahmen, die auf die Folie tropfen.

Daher war es mehr als überraschend, dass bereits mit niedrigen Konzentrationen des UV-Stabilisators ein hervorragender UV-Schutz erzielt wurde. Sehr überraschend war, dass sich bei diesem hervorragenden UV-Schutz

- der Gelbwert der Folie im Vergleich zu einer nicht stabilisierten Folie im Rahmen der Meßgenauigkeit nicht ändert;
- sich keine Ausgasungen, keine Düsenablagerungen, keine Rahmenausdampfungen einstellten, wodurch die Folie eine exzellente Optik aufweist und ein ausgezeichnetes Profil und eine ausgezeichnete Planlage hat;
- sich die UV-stabilisierte Folie durch eine hervorragende Streckbarkeit auszeichnet, so dass sie verfahrenssicher und stabil auf high speed film lines bis zu Geschwindigkeiten von 420 m/min produktionssicher hergestellt werden kann.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate , wobei die Halogenverbindungen aufgrund der entstehenden halogenhaltigen Nebenprodukte nachteilig sind. Des Weiteren ist die geringe Lichtbeständigkeit einer damit ausgerüsteten Folie neben der Entwicklung von Halogenwasserstoffen im Brandfall extrem nachteilig.

Geeignete Flammschutzmitteln, die gemäß der Erfindung eingesetzt werden, sind beispielsweise organische Phosphorverbindungen wie langkettige, verkapselte Anmoniumpolyphosphate oder Carboxyphosphinsäuren oder deren Anhydride und Dimethyl-methylphosphonat. Erfindungswesentlich ist, dass die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali-/Erdalkalistearate und/oder Alkali-/Erdalkalicarbonate in Mengen von 0,01 bis 1,0 Gew.-% eingesetzt. Phenolische Stabilisatoren werden in einer Menge von 0,05 bis 0,6 Gew.-%, insbesondere 0,15 bis 0,3 Gew.-% und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertärbutyl-4-Hydroxybenzyl)benzol sind besonders vorteilhaft.

Daher war es mehr als überraschend, dass mittels Masterbatch-Technologie, einer geeigneten Vortrocknung

und/oder Vorkristallisation und gegebenenfalls Einsatz von geringen Mengen eines Hydrolysestabilisators eine schwerentflammbare und thermoformbare Folie mit dem geforderten Eigenschaftsprofil wirtschaftlich und ohne Verklebung im Trockner herstellbar ist und dass die Folie nach Temperaturbelastung nicht versprödet und beim Knicken nicht bricht.

Sehr überraschend war, dass bei diesem hervorragenden Resultat und dem geforderten Flammschutz und der hohen UV-Stabilität:

- Der Gelbwert der Folie im Vergleich zu einer nicht ausgerüsteten Folie im Rahmen der Meßgenauigkeit nicht negativ beeinflusst ist,
- keine Ausgasungen, keine Düsenablagerungen, keine Rahmenausdampfungen auftreten, wodurch die Folie eine exzellente Optik aufweist, ein ausgezeichnetes Profil und eine hervorragende Planlage hat,
- sich die schwerentflammbare, UV-stabile Folie durch einen hervorragende Streckbarkeit auszeichnet, so dass sie verfahrenssicher und stabil auf »highspeed film-lines« bei Geschwindigkeiten von bis zu 420 m/min produktionssicher hergestellt werden kann.

Damit ist eine Folie auch wirtschaftlich rentabel.

Des Weiteren war es sehr überraschend, dass auch das bei der Produktion der Folie anfallende Verschnittmaterial, das Regenerat, wieder einsetzbar ist, ohne den Gelbwert der Folie negativ zu beeinflussen.

In einer bevorzugten Ausführungsform enthält die erfindungsgemäße, transparente, schwer entflammbare Folie als Hauptbestandteil ein kristallisierbares Polyethylenterephthalat, 1 bis 20 Gew.-% einer organischen im Polyethylenterephthalat löslichen organischen Phosphorverbindung als Flammschutzmittel und 0,1 Gew.-% bis 1,0 Gew.-% eines Hydrolysestabilisators und 0,01 Gew.-% bis 5,0 Gew.-% eines im PET löslichen UV-Absorbers aus der Gruppe der 2-Hydroxybenzotriazole oder der Triazine.

In einer ganz besonders bevorzugten Ausführungsform enthält die erfindungsgemäße Folie 0,01 Gew.-% bis 5,0 Gew.-% 2-(4,6-Diphenyl-1,3,5-triazin-2-yl)-5-(hexyl)oxyphenol der Formel

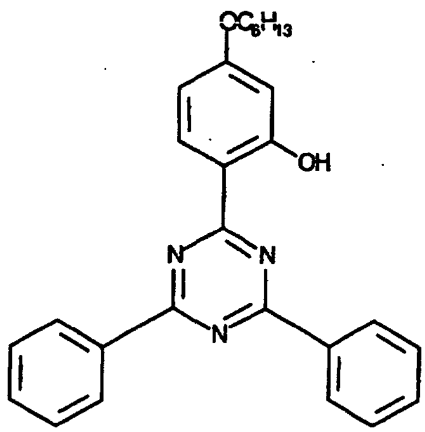

oder 0,01 Gew.-% bis 5,0 Gew.-% 2,2-Methylen-bis(6-(2H-benzotriazol-2-yl)-4-(1,1,2,2-tetramethylpropyl)-phenol der Formel

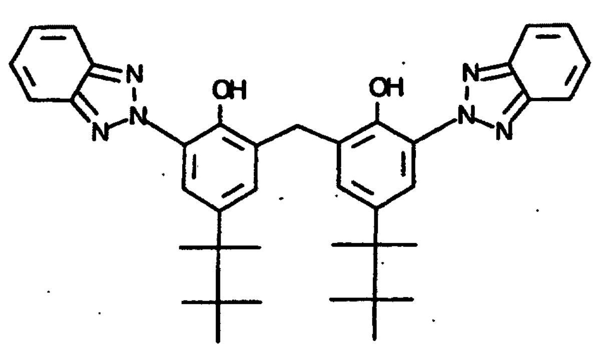

In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,01 Gew.-% und 5,0 Gew.-%, bezogen auf das Gewicht an kristallisierbarem Polyethylenterephthalat, liegt.

Die transparente, UV-stabilisierende, schwerentflammbare Folie hat folgendes Eigenschaftsprofil:

Der Oberflächenglanz, gemessen nach DIN 67530 (Messwinkel: 20°), ist größer als 100, vorzugsweise größer als 120, die Lichttransmission L, gemessen nach ASTM D 1003 beträgt mehr als 80%, vorzugsweise mehr als 82% und die Trübung der Folie gemessen nach ASTM S 1003, beträgt weniger als 20%, vorzugsweise weniger als 15%, was für die erzielte UV-Stabilität in Kombination mit der Schwerentflammbarkeit überraschend gute Eigenschaften sind.

Die Standardviskosität SV (DCE) des Polyethylenterephthalats, gemessen in Dichloressigsäure nach DIN 53728, liegt zwischen 600 und 1000, vorzugsweise zwischen 700 und 900.

Die erfindungsgemäße transparente Polyethylenterephthalat-Folie, die mindestens einen UV-Stabilisator und ein Flammschutzmittel enthält, kann sowohl einschichtig als auch mehrschichtig sein.

In der mehrschichtigen Ausführungsform ist die Folie aus mindestens einer Kernschicht und mindestens einer Deckschicht aufgebaut, wobei insbesondere ein dreischichtiger A-B-A oder A-B-C Aufbau bevorzugt ist.

Für diese Ausführungsform ist es wesentlich, dass das Polyethylenterephthalat der Kernschicht eine ähnliche Standardviskosität besitzt wie das Polyethylenterephthalat der Deckschicht (en), die an die Kernschicht angrenzt (angrenzen).

In einer besonderen Ausführungsform können die Deckschichten auch aus einem Polyethylennaphthalat-Homopolymeren oder aus einem Ethylenterephthalat-Ethylennaphthalat-Copolymeren oder einem Compound bestehen.

In dieser Ausführungsform haben die Thermoplaste der Deckschichten ebenfalls eine ähnliche Standardviskosität wie das Polyethylenterephthalat der Kernschicht. In der mehrschichtigen Ausführungsform ist der UV-Stabilisator vorzugsweise in den Deckschichten enthalten. Bei Bedarf kann zusätzlich auch die Kernschicht mit UV-Stabilisator ausgerüstet sein.

In der mehrschichtigen Ausführungsform ist das Flammschutzmittel vorzugsweise in der Kernschicht enthalten. Jedoch können bei Bedarf auch die Deckschichten mit Flammschutzmittel ausgerüstet sein.

In einer anderen Ausführungsform können auch Flammschutzmittel und UV-Stabilisator in den Deckschichten enthalten sein. Bei Bedarf und hohen Brandschutzanforderungen kann die Kernschicht additiv eine sogenannte "Grundausrüstung" an Flammschutzmittel enthalten.

Anders als in der einschichtigen Ausführungsform bezieht sich hier die Konzentration des Flammschutzmittels und des UV-Stabilisators in Gewichtsprozent auf das Gewicht der mit den Mitteln ausgerüsteten Schicht.

Ganz überraschend haben Bewitterungsversuche nach der Testspezifikation ISO 4892 mit dem Atlas C165 Weather Ometer gezeigt, dass es im Falle einer dreischichtigen Folie durchaus ausreichend ist, die 0,5 µm bis 2 µm dicken Deckschichten mit UV-Stabilisatoren auszurüsten, um eine verbesserte UV-Stabilität zu erreichen.

Brandversuche nach DIN 4102 Teil 1 und Teil 2 sowie der UL-Test 94 haben ebenso überraschend gezeigt, dass erfindungsgemäße Folien die Anforderungen erfüllen.

Dadurch werden die mit der bekannten Koextrusionstechnologie hergestellten schwerentflammbareh, UV-stabilisierten, mehrschichtigen Folien im Vergleich zu den komplett UV-stabilisierten und flammausgerüsteten Monofolien wirtschaftlich extrem interessant, da deutlich weniger Additive zum Erreichen einer vergleichbaren Schwerentflammbarkeit und UV-Stabilität benötigt werden.

Die Folie kann auch mindestens einseitig mit einer kratzfesten Beschichtung, mit einem Copolyester oder mit einem Haftvermittler versehen sein.

Bewitterungstests haben ergeben, dass die erfindungsgemäßen schwerentflammbaren, UV-stabilisierten Folien selbst nach 5 bis 7 Jahren (aus den im einzelnen durchgeführten Bewitterungstests hochgerechnet) Außenanwendung im allgemeinen keine erhöhte Vergilbung, keine Versprödung, keinen Glanzverlust der Oberfläche, keine Rißbildung an der Oberfläche und keine Verschlechterung der mechanischen Eigenschaften aufweisen.

Bei der Herstellung der Folie wurde festgestellt, dass sich die schwerentflammbare, UV-stabilisierte Folie hervorragend in Längs- und in Querrichtung ohne Abrisse orientieren läßt. Des Weiteren wurden keinerlei Ausgasungen im Produktionsprozess gefunden, die sich auf die Anwesenheit von UV-Stabilisator oder Flammschutzmittel zurückführen ließen, was erfindungswesentlich ist, da die meisten herkömmlichen UV-Stabilisatoren und Flammschutzmittel bei Extrusionstemperaturen von über 260°C sehr störende, unangenehme Ausgasungen zeigen, die auf die Zersetzung dieser Verbindungen unter den Verarbeitungsbedingungen zurückzuführen sind, und damit untauglich sind.

Überraschenderweise erfüllen schon erfindungsgemäße Folien im Dickenbereich von 5 bis 300 µm die Baustoffklasse B1 nach DIN 4102 Teil 1 und den UL-Test 94.

Bei der Herstellung der schwerentflammbaren, UV-stabilen Folie wurde weiter festgestellt, dass sich das Flammschutzmittel mittels Masterbatch-Technologie, einer geeigneten Vortrocknung bzw. Vorkristallisation des Flammschutzmasterbatches ohne Verklebungen im Trockner einarbeiten läßt, so dass eine wirtschaftliche Folienproduktion möglich ist.

Mehr als überraschend war, dass durch geringe Zugabe eines Hydrolysestabilisators im Flammschutz-Masterbatch die Einarbeitung nochmals erleichtert wird, so dass ohne Probleme die Durchsätze und damit die Produktionsgeschwindigkeiten erhöht werden können. In einer sehr speziellen Ausführungsform enthält die Folie noch in den Schichten, die mit Flammschutz-mittel ausgerüstet sind, geringe Mengen eines Hydrolysestabilisators.

Messungen ergaben, dass die erfindungsgemäße Folie bei Temperaturbelastungen von 100 °C über einen längeren Zeitraum nicht versprödet, was mehr als überraschend ist. Dieses Resultat ist auf die synergistische Wirkung von geeigneter Vorkristallisation, Vortrocknung, Masterbatch-Technologie und Ausrüstung mit UV-Stabilisator zurückzuführen.

Des Weiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder für den Messebau und andere Werbeartikel, wo Brandschutz gewünscht wird, eignet.

Die Herstellung der erfindungsgemäßen, transparenten, schwer entflammbaren, UV-stabilen Folie kann beispielsweise nach dem Extrusionsverfahren in einer Extrusionsstraße erfolgen.

Erfindungsgemäß wird das Flammschutzmittel, ggf. mit dem Hydrolysestabilisator, über die Masterbatch-Technologie zugegeben. Das Flammschutzmittel wird in einem Trägermaterial voll dispergiert. Als Trägermaterial kommen der Thermoplast selbst, wie z.B. das Polyethylenterephthalat oder auch andere Polymere, die mit dem Thermoplasten verträglich sind, in Frage.

Erfindungsgemäß kann der UV-Stabilisator bereits beim Thermoplast-Rohstoffhersteller zugegeben oder bei der Folienherstellung in den Extruder zudosiert werden.

Besonders bevorzugt ist die Zugabe des UV-Stabilisators über die Masterbatch-Technologie. Der UV-Stabilisator wird in einem festen Trägermaterial voll dispergiert. Als Trägermaterialien kommen gewisse Harze, der Thermoplast selbst, wie z.B. das Polyethylenterephthalat oder auch andere Polymere, die mit dem Thermoplasten ausreichend verträglich sind, in Frage.

Wichtig bei der Masterbatch-Technologie ist, dass die Korngröße und das Schüttgewicht des Masterbatches ähnlich der Korngröße und dem Schüttgewicht des Thermoplasten ist, so dass eine homogene Verteilung und damit eine homogene UV-Stabilisierung erfolgen kann.

Die Polyesterfolien können nach bekannten Verfahren aus einen Polyesterrohstoff mit ggf. weiteren Rohstoffen, dem Flammschutzmittel, ggf. dem Hydrolysestabilisator, dem UV-Stabilisator und/oder weiteren üblichen Additiven in üblicher Menge von 1,0 bis max. 30 Gew.-% sowohl als Monofolie als auch als mehrschichtige, ggf. koextrudierte Folien mit gleichen oder unterschiedlich ausgebildeten Oberflächen hergestellt werden, wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

Erfindungswesentlich ist, dass das Masterbatch, welches das Flammschutzmittel und gegebenenfalls den Hydrolysestabilisator enthält, vorkristallisiert bzw. vorgetrocknet wird. Diese Vortrocknung beinhaltet ein gradielles Erhitzen des Masterbatches unter reduziertem Druck (20 bis 80 mbar, vorzugsweise 30 bis 60 mbar, insbesondere 40 bis 50 mbar ) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160°C, vorzugsweise 20°C bis 150°C, insbesondere 30°C bis 130°C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei 90° bis 180 °C, vorzugsweise 100°C bis 170°C, insbesondere 110°C bis 160°C für 2 bis 8 Stunden, vorzugsweise 3 bis 7 Stunden, insbesondere 4 bis 6 Stunden nachgetrocknet

Bei dem bevorzugten Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese amorphe Vorfolie wird anschließend erneut erhitzt und in Längs- und Querrichtung bzw. in Quer- und Längsrichtung bzw. in Längs-, in Quer- und nochmals und Längsrichtung und/oder Querrichtung gestreckt. Die Strecktemperaturen liegen im allgemeinen bei $T_G$ + 10 °C bis $T_G$ + 60 °C ($T_G$ = Glastemperatur), das Streckverhältnis der Längsstreckung liegt üblicherweise bei 2 bis 6, insbesondere bei 3 bis 4,5, das der Querstreckung liegt bei 2 bis 5, insbesondere bei 3 bis 4,5 und das der ggf. durchgeführten zweiten Längs- bzw. Querstreckung liegt bei 1,1 bis 5. Die erste Längsstreckung kann ggf. gleichzeitig mit der Querstreckung (Simultanstreckung) durchgeführt werden. Anschließend folgt die Thermofixierung der Folie bei Ofentemperaturen von 180 bis 260 °C, insbesondere bei 220 bis 250 °C. Anschließend daran wird die Folie abgekühlt und aufgewickelt.

Durch die überraschende Kombination ausgezeichneter Eigenschaften eignet sich die erfindungsgemäße Folie hervorragend für eine Vielzahl verschiedener Anwendungen, beispielsweise für Innenraumverkleidungen, für

Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen.

Die Erfindung wird im folgenden anhand von Ausführungsbeispielen näher erläutert.

Die Messungen der einzelnen Eigenschaften erfolgt dabei gemäß der folgenden Normen bzw. Verfahren:

**Meßmethoden**

**Oberflächenglanz**

Der Oberflächenglanz wird bei einem Messwinkel von 20° nach DIN 67530 gemessen.

**Lichttransmission**

Unter der Lichttransmission ist das Verhältnis des insgesamt durchgelassenen Lichtes zur einfallenden Lichtmenge zu verstehen.

Die Lichttransmission wird mit dem Messgerät "® HAZEGARD plus" nach ASTM D 1003 gemessen.

**Trübung**

Trübung ist der prozentuale Anteil des durchgelassenen Lichtes, der vom eingestrahlten Lichtbündel im Mittel um mehr als 2,5° abweicht. Die Bildschärfe wird unter einem Winkel kleiner 2,5° ermittelt.

Die Trübung wird mit dem Messgerät "HAZEGARD plus" nach ASTM D 1003

**Oberflächendefekte**

Die Oberflächendefekte werden visuell bestimmt.

**Mechanische Eigenschaften**

Der E-Modul, die Reißfestigkeit und die Reißdehnung werden in Längs- und Querrichtung nach ISO 527-1-2 gemessen.

**SV (DCE), IV (DVE)**

Die Standardviskosität SV (DCE) wird angelehnt an DIN 53726 in Dichioressigsäure gemessen.

Die intrinsische Viskosität (IV) berechnet sich wie folgt aus der Standardviskosität

$$IV\ (DCE) = 6{,}67 \cdot 10^{-4}\ SV\ (DCE) + 0{,}118$$

**Brandverhalten**

Das Brandverhalten wird nach DIN 4102, Teil 2, Baustoffklasse B2, und nach DIN 4102, Teil 1, Baustoffklasse B1, sowie nach dem UL-Test 94 ermittelt.

**Bewitterung (beidseitig), UV-Stabilität**

Die UV-Stabilität wird nach der Testspezifikation ISO 4892 wie folgt geprüft

| | |
|---|---|
| Testgerät | Atlas Ci 65 Weather Ometer |
| Testbedingungen | ISO 4892, d. h. künstlich Bewitterung |
| Bestrahlungszeit | 1000 Stunden (pro Seite) |
| Bestrahlung | 0,5 W/m$^2$, 340 nm |
| Temperatur | 63 °C |
| Relative Luftfeuchte | 50 % |

(fortgesetzt)

| | |
|---|---|
| Xenonlampe | innerer und äußerer Filter aus Borosilikat |
| Bestrahlungszyklen | 102 Minuten UV-Ucht, dann 18 Minuten UV-Licht mit Wasserbesprühung der Proben dann wieder 102 Minuten UV-Licht usw. |

Numerische Werte von < 0,3 sind vernachlässigbar und bedeuten, dass keine signifikante Farbänderung vorliegt.

**Gelbwert**

Der Gelbwert (YID) ist die Abweichung von der Farblosigkeit in Richtung "Gelb" und wird gemäß DIN 6167 gemessen. Gelbwerte (YID) von < 5 sind visuell nicht sichtbar.
Bei nachstehenden Beispielen und Vergleichsbeispielen handelt es sich jeweils um transparente Folien unterschiedlicher Dicke, die auf der beschriebenen Extrusionsstraße hergestellt wurden.
Alle Folien wurden zunächst nach der Testspezifikation ISO 4892 beidseitig je 1000 Stunden pro Seite mit dem Atlas Ci 65 Weather Ometer der Fa. Atlas bewittert und anschließend bezüglich ihrer mechanischen Eigenschaften, dem Gelbwert (YID), der Oberflächendefekte, der Lichttransmission und des Glanzes geprüft.
An allen Folien wurden Brandtests nach DIN 4102, Teil 2 und Teil 1, und nach UL-Test 94 durchgeführt.

**Beispiele**

**Beispiel 1**

Es wird eine 50 µm dicke, transparente Folie hergestellt, die als Hauptbestandteil Polyethylenterephthalat, 0,2 Gew.% ®Sylobloc als Antiblockmittel, 4 Gew.-% der organischen Phosphorverbindung als Flammschutzmittel und 1,0 Gew.-% des UV-Stabilisators 2-(4,6-Diphenyl-1,3,5 triazin-2yl)-5-(hexyl) oxyphenol (®Tinuvin 1577) enthält.
Zwecks homogener Verteilung werden 0,2 Gew.-% Sylobloc direkt beim Rohstoffhersteller in das Polyethylenterephthalat (PET) eingearbeitet.
Das Polyethylenterephthalat, aus dem die transparente Folie hergestellt wird, hat eine Standardviskosität SV (DCE) von 810, was einer intrinsischen Viskosität IV (DCE) von 0,658 dl/g entspricht.
Tinuvin 1577 hat einen Schmelzpunkt von 149 °C und ist bis ca. 330 °C thermisch stabil. Der UV-Stabilisator Tinuvin 1577 wird in Form eines Masterbatches zudosiert. Das Masterbatch setzt sich aus 5 Gew.-% Tinuvin 1577 als Wirkstoffkomponente und 95 Gew.-% PET mit einer Standardviskosität von SC (DCE) = 810, was einer intrinsischen Viskosität IV (DCE) von 0,658 dl/g entspricht.
Bei dem Flammschutzmittel handelt es sich um die organische Phosphorverbindung Dimethyl-Methylphosphonat ® Amgard P 1045 der Fa. Albright & Wilson, die in PET löslich ist.
Das Flammschutzmittel wird ebenfalls in Form eines Masterbatches zudosiert. Das Masterbatch setzt sich aus 20 Gew.-% Flammschutzmittel und 80 Gew.-% PET mit einer Standardviskosität SV (DCE) von 810 zusammen.
Beide Masterbatche haben ein Schüttgewicht von 750 $kg/m^3$.
40 Gew.-% PET mit 0,2 Gew.-% Sylobloc, 30 Gew.-% PET-Rezyklat, 10 Gew.-% UV-Masterbatch und 20 Gew.-% Flammschutz-Masterbatch werden bei Raumtemperatur aus separaten Dosierbehältern in einen Vakuumtrockner gefüllt, der von dem Einfüllzeitpunkt bis zum Ende der Verweilzeit ein Temperaturspektrum von 25 °C bis 130 °C durchläuft. Während der ca. 4-stündigen Verweilzeit wird das Rohstoffgemisch mit 61 Upm gerührt.
Das vorkristallisierte bzw. vorgetrocknete Rohstoffgemisch wird in dem nachgeschalteten, ebenfalls unter Vakuum stehenden Hopper bei 140 °C 4 Stunden nachgetrocknet.
Anschließend wird mit dem beschriebenen Extrusionsverfahren die 50 µm Monofolie hergestellt.
Die hergestellte transparente PET-Folie hat folgendes Eigenschaftsprofil:

| | |
|---|---|
| Dicke | 50 µm |
| Oberflächenglanz 1. Seite | 155 |
| (Messwinkel 20°) 2. Seite | 152 |
| Lichttransmission | 91 % |
| Trübung | 4,0 % |
| Oberflächendefekte pro $m^2$ (Risse, Versprödungen) | keine |

(fortgesetzt)

| | |
|---|---|
| E-Modul längs | 4100 N/mm$^2$ |
| E-Modul quer | 5400 N/mm$^2$ |
| Reissfestigkeit längs | 170 N/mm$^2$ |
| Reissfestigkeit quer | 260 N/mm$^2$ |
| Gelbzahl (YID) | 3,1 |

Nach 200 Stunden Tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2/Teil 1 die Baustoffklassen B 2 und B 1. Die Folie besteht den UL-Test 94.

Nach je 1000 Stunden Bewitterung pro Seite mit dem Atlas Ci 65 Weather Ometer zeigt die PET-Folie folgende Eigenschaften:

| | |
|---|---|
| Dicke | 50 µm |
| Oberflächenglanz 1. Seite | 148 |
| (Messwinkel 20°) 2. Seite | 146 |
| Lichttransmission | 89,9 % |
| Trübung | 4,2 % |
| Oberflächendefekte pro m$^2$ (Risse, Versprödungen) | keine |
| E-Modul längs | 3950 N/mm$^2$ |
| E-Modul quer | 5200 N/mm$^2$ |
| Reissfestigkeit längs | 151 N/mm$^2$ |
| Reissfestigkeit quer | 238 N/mm$^2$ |
| Gelbzahl (YID) | 3,1 |

**Beispiel 2**

Nach der Koextrusionstechnologie wird eine 17 µm dicke mehrschichtige PET-Folie mit der Schichtreihenfolge A-B-A hergestellt, wobei B die Kernschicht und A die Deckschichten repräsentieren. Die Kernschicht ist 15 µm dick und die beiden Deckschichten, die die Kernschicht überziehen, besitzen eine Dicke von jeweils 1 µm.

Das für die Kernschicht B eingesetzt Polyethylenterephthalat ist identisch mit dem Polymer aus Beispiel 1, enthält aber kein Sylobloc. Die Kernschicht enthält 0,2 Gew.-% Hydrolysestabilisator und 5 Gew.-% Flammschutzmittel. Der Hydrolysestabilisator und das Flammschutzmittel werden wie im Beispiel 1 in Form eines Masterbatches zudosiert. Das Masterbatch setzt sich aus 25 Gew.-% Flammschutzmittel, 1 Gew.-% Hydrolysestabilisator und 74 Gew.-% Polyethylenterephthalat zusammen. Der Hydrolysestabilisator und das Flammschutzmittel sind identisch mit den in Beispiel 1 eingesetzten Wirkstoffen.

Das Polyethylenterephthalat der Deckschichten A ist identisch mit dem Polyethylenterephthalat aus Beispiel 1, d.h. der Deckschichtrohstoff ist mit 0,2 Gew.-% Sylobloc ausgerüstet. Die Deckschichten enthalten keinen Hydrolysestabilisator und kein Flammschutzmittel. Die Deckschichten enthalten zusätzlich 1,0 Gew.-% Tinuvin 1577, was direkt beim Rohstoffhersteller in dieser Menge eingearbeitet wurde.

Für die Kernschicht werden 50 Gew.-% Polyethylenterephthalat, 30 Gew.-% Polyethylenterephthalat-Rezyklat und 20 Gew.-% des Masterbatches entsprechend Beispiel 1 vorkristallisiert, vorgetrocknet und nachgetrocknet.

Der Deckschichtrohstoff, der Sylobloc und 1 Gew.-% Tinuvin 1577 enthält, erfährt keine besondere Trocknung. Mittels Koextrusionstechnologie wird eine 17 µm dicke Folie mit der Schichtreihenfolge A-B-A hergestellt, die folgendes Eigenschaftsprofil zeigt:

| | |
|---|---|
| Schichtaufbau | A-B-A |
| Dicke | 17 µm |
| Oberflächenglanz 1. Seite | 174 |
| (Messwinkel 20°) 2. Seite | 169 |
| Lichttransmission | 94,2 % |
| Trübung | 2,1 % |
| Oberflächendefekte pro m$^2$ | keine |

(fortgesetzt)

| | |
|---|---|
| (Risse, Versprödungen) | |
| E-Modul längs | 4100 $N/mm^2$ |
| E-Modul quer | 4720 $N/mm^2$ |
| Reissfestigkeit längs | 180 $N/mm^2$ |
| Reissfestigkeit quer | 205 $N/mm^2$ |
| Gelbzahl (YID) | 2,9 |

Nach 200 Stunden Tempern bei 100 °C im Umlufttrocknerschrank sind die mechanischen Eigenschaften unverändert. Die Folie zeigt keinerlei Versprödungserscheinungen.

Die Folie erfüllt nach DIN 4102, Teil 2 und Teil 1, die Baustoffklassen B 2 und B 1. Die Folie besteht den UL-Test.

Nach je 1000 Stunden Bewitterung pro Seite mit dem Atlas Ci 65 Weather Ometer zeigt die PET-Folie folgende Eigenschaften:

| | |
|---|---|
| Dicke | 17 µm |
| Oberflächenglanz 1. Seite | 168 |
| (Messwinkel 20°) 2. Seite | 160 |
| Lichttransmission | 91,6 % |
| Trübung | 2,9 % |
| Oberflächendefekte pro $m^2$ | keine |
| (Risse, Versprödungen) | |
| E-Modul längs | 3800 $N/mm^2$ |
| E-Modul quer | 4450 $N/mm^2$ |
| Reissfestigkeit längs | 150 $N/mm^2$ |
| Reissfestigkeit quer | 170 $N/mm^2$ |
| Gelbzahl (YID) | 3,5 |

**Beispiel 3**

Entsprechend Beispiel 2 wird eine 20 µm dicke A-B-A-Folie hergestellt, wobei die Kemschicht B 16 µm und die Deckschichten A jeweils 2 µm dick sind.

Die Kernschicht B enthält nur 5 Gew.-% des Flammschutzmittel-Masterbatches aus Beispiel 2.

Die Deckschichten sind identisch mit denen aus Beispiel 2, enthalten aber noch zusätzlich 20 Gew.-% des Flammschutz-Masterbatches, welches in Beispiel 2 nur für die Kernschicht eingesetzt wurde.

Die Rohstoffe und die Masterbatche für die Kernschicht und die Deckschichten werden entsprechend Beispiel 1 vorkristallisiert, vorgetrocknet und nachgetrocknet. Die mittels Koextrusionstechnologie hergestellte, mehrschichtige 20 µm Folie hat folgendes Eigenschaftsprofil:

| | |
|---|---|
| Schichtaufbau | A-B-A |
| Dicke | 20 µm |
| Oberflächenglanz 1. Seite | 168 |
| (Messwinkel 20°) 2. Seite | 163 |
| Lichttransmission | 94,0 % |
| Trübung | 2,2 % |
| Oberflächendefekte pro $m^2$ | keine |
| (Risse, Versprödungen) | |
| E-Modul längs | 4000 $N/mm^2$ |
| E-Modul quer | 4700 $N/mm^2$ |
| Reissfestigkeit längs | 180 $N/mm^2$ |
| Reissfestigkeit quer | 205 $N/mm^2$ |
| Gelbzahl (YID) | 2,9 |

Nach 200 Stunden Tempern bei 100 °C im Umlufttrocknerschrank sind die mechanischen Eigenschaften

unverändert. Die Folie zeigt keinerlei Versprödungserscheinungen.

Die Folie erfüllt nach DIN 4102 Teil 2 und Teil 1 die Baustoffklassen B 2 und B 1. Die Folie besteht den UL-Test.

Nach je 1000 Stunden Bewitterung pro Seite mit dem Atlas Ci 65 Weather Ometer zeigt die PET-Folie folgende Eigenschaften:

| | |
|---|---|
| Dicke | 20 µm |
| Oberflächenglanz 1. Seite | 161 |
| (Messwinkel 20°) 2. Seite | 155 |
| Lichttransmission | 91,2 % |
| Trübung | 3,1 % |
| Oberflächendefekte pro $m^2$ (Risse, Versprödungen) | keine |
| E-Modul längs | 3750 $N/mm^2$ |
| E-Modul quer | 4400 $N/mm^2$ |
| Reissfestigkeit längs | 150 $N/mm^2$ |
| Reissfestigkeit quer | 165 $N/mm^2$ |
| Gelbzahl (YID) | 3,6 |

**Vergleichsbeispiel 1**

Beispiel 2 wird wiederholt. Die Folie wird aber nicht mit UV-Stabilisatoren und nicht mit Flammschutzmittel-Masterbatch ausgerüstet, d.h. die Folie enthält keinen Hydrolysestabilisator, kein Flammschutzmittel und keinen UV-Stabilisator.

Das Eigenschaftsprofil der unausgerüsteten Folie ist dem der ausgerüsteten Folie aus Beispiel 2 vergleichbar.

Die unausgerüstete Folie erfüllt die Tests nach DIN 4102, Teil 1 und Teil 2, sowie den UL Test 94 nicht.

Nach 1000 Stunden Bewitterung pro Seite mit dem Atlas CI Weather Ometer weist die Folie an den Oberflächen Risse und Versprödungserscheinungen auf. Ein präzises Eigenschaftsprofil - insbesondere die mechanischen Eigenschaften - kann daher nicht mehr gemessen werden. Außerdem zeigt die Folie eine visuell sichtbare Gelbfärbung.

**Patentansprüche**

1. Transparente, ein- oder mehrschichtige, schwerentflammbare, UV-stabile, in Längs- und Querrichtung orientierte Folie aus einem kristallisierbaren Thermoplasten, deren Dicke im Bereich von 5 µm bis 300 µm liegt, **dadurch gekennzeichnet, dass** die Folie mindestens einen UV-Stabilisator, der mindestens 70 % des UV-Lichtes im Wellenlängenbereich von 180 nm bis 380 nm absorbiert und mindestens ein Flammschutzmittel, welches eine organische Phosphorverbindung ist, in einer Menge im Bereich zwischen 0,5 und 30 Gew.-% (bezogen auf das Gewicht der Schicht des kristallisierbaren Thermoplasten) enthält, wobei mindestens das Flammschutzmittel dem kristallisierbaren Thermoplasten bei der Folienherstellung als Masterbatch direkt zudosiert wird.

2. Folie nach Anspruch 1, **dadurch gekennzeichnet, dass** auch der UV-Stabilisator dem kristallisierbaren Thermoplasten bei der Folienherstellung als Masterbatch direkt zudosiert wird.

3. Folie nach Anspruch 1 oder 2, **dadurch gekennzeichnet, dass** sie als kristallisierbaren Thermoplasten Polyethylenterephthalat, Polybutylenterephthalat oder Polyethylennaphthalat enthält, vorzugsweise Polyethylenterephthalat.

4. Folie nach Anspruch 1,2 oder 3, **dadurch gekennzeichnet, dass** sie zusätzlich mit Copolyestern oder Haftvermittlern beschichtet ist.

5. Folie nach einem der Ansprüche 1 bis 4, **dadurch gekennzeichnet, dass** sie das Flammschutzmittel in einer Menge im Bereich zwischen 1 und 20 Gew.-%, bezogen auf das Gewicht der Schicht des kristallisierbaren Thermoplasten, enthält.

6. Folie nach einem der Ansprüche 1 bis 5, **dadurch gekennzeichnet, dass** sie den UV-Stabilisator in einer Menge im Bereich zwischen 0,01 und 5 Gew.-%, bezogen auf das Gewicht der Schicht des kristallisierbaren Thermoplasten, enthält.

7. Folie nach einem der Ansprüche 1 bis 6, **dadurch gekennzeichnet, dass** sie als UV-Stabilisatoren Lichtschutzmittel aus der Gruppe der 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine enthält, wobei die 2-Hydroxybenzotriazole und die Triazine bevorzugt sind.

8. Folie nach einem der Ansprüche 1 bis 7, **dadurch gekennzeichnet, dass** sie als Flammschutzmittel solche organischen Phosphorverbindungen enthält, die in Polyethylenterephthalat löslich sind.

9. Folie nach Anspruch 8, **dadurch gekennzeichnet, dass** sie als Flammschutzmittel Dimethyl-Methylphosphonat enthält.

10. Folie nach einem der Ansprüche 1 bis 9, **dadurch gekennzeichnet, dass** sie zusätzlich einen Hydrolysestabilisator in einer Menge im Bereich von 0,1 bis 1,0 Gew.-% aus der Gruppe enthaltend Alkali-/Erdalkalistearate und/oder Alkali-/Erdalkalicabonate enthält, oder in einer Menge von 0,05 bis 0,6 Gew.-%, insbesondere von 0,1 bis 0,3 Gew.-%, aus der Gruppe der phenolischen Stabilisatoren mit einer Molmasse von mehr als 500 g/mol, insbesondere Penataerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol.

11. Folie nach einem der Ansprüche 1 bis 10, **dadurch gekennzeichnet, dass** sie als organische Phosphorverbindung langkettige, verkapselte Anmoniumpolyphosphate oder Carboxyphosphinsäuren oder deren Anhydride enthält und neben dem Hydrolysestabilisator 0,01 bis 5,0 Gew.-% 2-(4,6-Diphenyl-1,3,5-triazin-2-yl)-5-(hexyl)oxy-phenol oder 0,01 bis 5,0 Gew.-% 2,2-Methylen-bis(6-(2H-benzotriazol-2-yl)-4-(1,1,2,2-tetramethylpropyl)-phenol oder Mischungen dieser UV-Stabilisatoren oder Mischungen von mindestens einem dieser beiden UV-Stabilisatoren mit anderen UV-Stabilisatoren, wobei die Gesamtmenge an UV-Stabilisator zwischen 0,01 und 5,0 Gew.-%, bezogen auf das Gewicht an kristallisierbarem Polyethylenterephthalat, liegt.

12. Folie nach einem der Ansprüche 1 bis 11, **dadurch gekennzeichnet, dass** ihr Oberflächenglanz, gemessen nach DIN 67530 (Messwinkel: 20°), größer als 100, vorzugsweise größer als 120 ist, dass ihre Lichttransmission L, gemessen nach ASTM D 1003 mehr als 80%, vorzugsweise mehr als 82% beträgt und dass ihre Trübung gemessen nach ASTM S 1003, weniger als 20% beträgt, vorzugsweise weniger als 15%.

13. Verfahren zum Herstellen einer transparenten, schwer entflammbaren, UV-stabilen Folie nach einem der Ansprüche 1 bis 12 nach dem Extrusionsverfahren in einer Extrusionsstraße, **dadurch gekennzeichnet, dass** das Flammschutzmittel, ggf. zusammen mit dem Hydrolysestabilisator, über die Masterbatch-Technologie zugegeben wird, wobei das Flammschutzmittel in einem festen Trägermaterial wie dem Thermoplasten selbst, Polyethylenterephthalat oder einem anderen Polymer, das mit dem Thermoplasten verträglich ist, voll dispergiert ist.

14. Verfahren nach Anspruch 13, **dadurch gekennzeichnet, dass** zusätzlich auch der UV-Stabilisator über die Masterbatch-Technologie zugegeben wird, wobei der UV-Stabilisator in einem festen Trägermaterial wie Harz, dem Thermoplasten selbst, Polyethylenterephthalat oder einem anderen Polymer, das mit dem Thermoplasten ausreichend verträglich ist, voll dispergiert ist.

15. Verfahren nach Anspruch 13 oder 14, **dadurch gekennzeichnet, dass** die Korngröße und das Schüttgewicht des Masterbatches ähnlich der Korngröße und dem Schüttgewicht des Thermoplasten eingestellt wird.

16. Verfahren nach einem der Ansprüche 13 bis 15, **dadurch gekennzeichnet, dass** das Masterbatch, welches das Flammschutzmittel und den Hydrolysestabilisator enthält, vorkristallisiert bzw. vorgetrocknet wird, wobei das Masterbatch bei Raumtemperatur aus einem Dosierbehälter in der gewünschten Abmischung zusammen mit dem Thermoplasten und ggf. anderen Rohstoffkomponenten chargenweise in einen Vakuumtrockner eingefüllt wird, der dann im Laufe der Trocken- bzw. Verweilzeit ein Temperaturspektrum von 20 bis 130 °C durchläuft, und wobei während der 2- bis 4-stündigen Verweilzeit die Rohstoffmischung mit 10 bis 70 Upm gerührt wird.

17. Verfahren nach einem der Ansprüche 13 bis 16, **dadurch gekennzeichnet, dass** das vorkristallisierte bzw. vorgetrocknete Rohstoffgemisch in einem nachgeschalteten ebenfalls evakuierten Behälter bei einer Temperatur im Bereich von 100 bis 170 °C nachgetrocknet wird.

**18.** Verwendung einer Folie nach einem der Ansprüche 1 bis 12, hergestellt nach einem Verfahren der Ansprüche 12 bis 16 für Innenraumverkleidungen, für den Messebau, für Messeartikel, als Display, für Schilder, für Schutzverglasungen von Maschinen und Fahrzeugen, im Beleuchtungssektor, im Laden- und Regalbau, als Werbeartikel, als Kaschiermedium, für Gewächshäuser, für Überdachungen, für Außenverkleidungen, für Abdeckungen und für Anwendungen im Bausektor wie Lichtwerbeprofile, Schattenmatten oder Elektroanwendungen.

## Claims

**1.** A transparent, low-flammability, UV-resistant, longitudinally and transversely oriented film which has one or more layers and is made from a crystallizable thermoplastic and has a thickness of from 5 to 300 μm, wherein the film comprises at least one UV stabilizer which absorbs at least 70% of the UV light in the wavelength region from 180 to 380 nm and at least one flame retardant which is an organophosphorus compound, in an amount in the range from 0.5 to 30% by weight (based on the weight of the layer of the crystallizable thermoplastic), where at least the flame retardant is directly metered in the form of a masterbatch into the crystallizable thermoplastic during film production.

**2.** The film as claimed in claim 1, wherein the UV stabilizer, too, is directly metered in the form of a masterbatch into the crystallizable thermoplastic during film production.

**3.** The film as claimed in claim 1 or 2, wherein the crystallizable thermoplastic present comprises polyethylene terephthalate, polybutylene terephthalate or polyethylene naphthalate, preferably polyethylene terephthalate.

**4.** The film as claimed in claim 1, 2 or 3, which has additionally been coated with copolyesters or with adhesion promoters.

**5.** The film as claimed in any one of claims 1 to 4, wherein the amount of flame retardant present is from 1 to 20% by weight, based on the weight of the layer of the crystallizable thermoplastic.

**6.** The film as claimed in any one of claims 1 to 5, wherein the amount of the UV stabilizer present is from 0.01 to 5% by weight, based on the weight of the layer of the crystallizable thermoplastic.

**7.** The film as claimed in any one of claims 1 to 6, wherein the UV stabilizers present comprise light stabilizers selected from the group consisting of the 2-hydroxybenzophenones, 2-hydroxybenzotriazoles, organonickel compounds, salicylic esters, cinnamic ester derivatives, resorcinol monobenzoates, oxanilides, hydroxybenzoic esters, sterically hindered amines and triazines, and preference is given to the 2-hydroxybenzotriazoles and the triazines.

**8.** The film as claimed in any one of claims 1 to 7, wherein the flame retardants present comprise organophosphorus compounds soluble in polyethylene terephthalate.

**9.** The film as claimed in claim 8, wherein the flame retardant present comprises dimethyl methylphosphonate.

**10.** The film as claimed in any one of claims 1 to 9, wherein from 0.1 to 1.0% by weight of a hydrolysis stabilizer selected from the group consisting of alkali metal/alkaline earth metal stearates and/or alkali metal/alkaline earth metal carbonates, or from 0.05 to 0.6% by weight, in particular from 0.1 to 0.3% by weight, of a hydrolysis stabilizer selected from the group consisting of the phenolic stabilizers having a molar mass above 500 g/mol, in particular pentaerythrityl tetrakis-3-(3,5-di-tert-butyl-4-hydroxyphenyl)propionate or 1,3,5-trimethyl-2,4,6-tris(3,5-di-tert-butyl-4-hydroxybenzyl)benzene, is additionally present in the film.

**11.** The film as claimed in any one of claims 1 to 10, wherein the organophosphorus compound present in the film comprises long-chain, encapsulated ammonium polyphosphates or carboxyphosphinic acids or anhydrides of these and, besides the hydrolysis stabilizer, from 0.01 to 5.0% by weight of 2-(4,6-diphenyl-1,3,5-triazin-2-yl)-5-hexyloxyphenol or from 0.01 to 5.0% by weight of 2,2-methylenebis(6-(2H-benzotriazol-2-yl)-4-(1,1,2,2-tetramethylpropyl)phenol or mixtures of these UV stabilizers or mixtures of at least one of these two UV stabilizers with other UV stabilizers are present in the film, where the total amount of UV stabilizer is from 0.01 to 5.0% by weight, based on the weight of crystallizable polyethylene terephthalate.

**12.** The film as claimed in any one of claims 1 to 11, wherein the surface gloss of the film, measured to DIN 67530

(measurement angle: 20°), is above 100, preferably above 120, and wherein its luminous transmittance L, measured to ASTM D 1003, is above 80%, preferably above 82%, and wherein its haze, measured to ASTM S 1003, is below 20%, preferably below 15%.

**13.** A process for producing a transparent, low-flammability, UV-resistant film as claimed in any one of claims 1 to 12 by extrusion on an extrusion line, which comprises adding the flame retardant, if desired together with the hydrolysis stabilizer, by way of masterbatch technology, where the flame retardant has been fully dispersed in a solid carrier material, for example in the thermoplastic itself, in polyethylene terephthalate or in another polymer compatible with the thermoplastic.

**14.** The process as claimed in claim 13, wherein the UV stabilizer, too, is added by way of masterbatch technology, where the UV stabilizer has been fully dispersed in a solid carrier material, for example in resin, in the thermoplastic itself, in polyethylene terephthalate or in another polymer sufficiently compatible with the thermoplastic.

**15.** The process as claimed in claim 13 or 14, wherein the particle size and the bulk density of the masterbatch are set to be similar to the particle size and the bulk density of the thermoplastic.

**16.** The process as claimed in any one of claims 13 to 15, wherein the masterbatch in which the flame retardant and the hydrolysis stabilizer are present is precrystallized or predried, by taking the masterbatch at room temperature from a metering vessel in the desired blend together with the thermoplastic and, if desired, with other raw material components, batchwise into a vacuum dryer which then operates with a temperature profile of from 20 to 130°C during the course of the drying time or residence time, and during the residence time of from 2 to 4 hours the mixture of raw materials is stirred at from 10 to 70 rpm.

**17.** The process as claimed in any one of claims 13 to 16, wherein the precrystallized or predried mixture of raw materials is post-dried in a downstream vessel, likewise evacuated, at a temperature of from 100 to 170°C.

**18.** The use of a film as claimed in any one of claims 1 to 12, produced by a process of any one of claims 13 to 17, for interior decoration, for constructing exhibition stands, for exhibition requisites, as a display, for placards, for protective glazing of machines or of vehicles, in the lighting sector, for the fitting out of shops or stores, as a promotional requisite, as a laminating medium, for greenhouses, for roofing systems, for exterior cladding, for protective coverings or for applications in the construction sector, such as illuminated advertizing profiles, blinds or electrical applications.

## Revendications

**1.** Feuille transparente, mono- ou multicouche, difficilement inflammable, stable vis-à-vis des UV, orientée longitudinalement et transversalement, à base d'un thermoplastique cristallisable, dont l'épaisseur est dans la gamme de 5 microns à 300 microns, **caractérisée en ce que** ladite feuille contient au moins un agent stabilisant vis-à-vis des UV, qui absorbe au moins 70% de la lumière UV dans le domaine de longueur d'ondes de 190 nm à 380 nm, et au moins un agent ignifugeant, qui est un composé phosphoré organique, en une quantité comprise entre 0,5 et 30% en masse (par rapport à la masse de la couche de thermoplastique cristallisable), où, lors de la fabrication de la feuille, au moins l'agent ignifugeant est incorporé au thermoplastique cristallisable directement par addition dosée et en tant que mélange maître (Masterbatch).

**2.** Feuille selon la revendication 1, **caractérisée en ce que**, lors de la fabrication de la feuille, le stabilisant vis-à-vis des UV est également incorporé au thermoplastique cristallisable directement par addition dosée en tant que mélange maître.

**3.** Feuille selon la revendication 1 ou 2, **caractérisé en ce qu'**elle contient, à titre de thermoplastique cristallisable, du polyéthylène téréphtalate, du polybutytène téréphtalate ou du polyéthylène naphtalate, de préférence du polyéthylène téréphtalate.

**4.** Feuille selon la revendication 1, 2 ou 3, **caractérisée en ce qu'**elle est en outre revêtue avec des copolyesters ou des agents adhésifs.

**5.** Feuille selon les revendications 1 à 4, **caractérisée en ce qu'**elle contient l'agent ignifugeant en une quantité

comprise entre 1 et 20% en masse par rapport à la masse de la couche selon l'une des revendications 1 à 4.

6. Feuille selon l'une des revendications 1 à 5, **caractérisée en ce qu'**elle contient l'agent stabilisant vis-à-vis des UV, en une quantité comprise entre 0,01 et 5% en masse par rapport à la masse de la couche du thermoplastique cristallisable.

7. Feuille selon l'une des revendications 1 à 6, **caractérisée en ce qu'**elle contient, à titre d'agents stabilisants vis-à-vis des UV, des agents de protection vis-à-vis de la lumière choisis dans les groupes des composés suivants : 2-hydroxybenzophénone, 2-hydroxybenzotriazole, composés organonickel, esters de l'acide salicylique, dérivés esters de l'acide cinnamique, le monobenzoate de résorcine, l'anilide de l'acide oxalique, l'ester de l'acide hydroxybenzoïque, les amines encombrés stériquement et la triazine, le 2-hydroxybenzotriazole et la triazine étant préférés.

8. Feuille selon l'une des revendications 1 à 7, **caractérisée en ce qu'**elle contient, à titre d'agents ignifugeants, des composés phosphorés organiques choisis tels qu'ils sont solubles dans le polyéthylène téréphtalate.

9. Feuille selon la revendication 8, **caractérisée en ce qu'**elle contient, à titre d'agent ignifugeant, du diméthyl-méthylphosphonate.

10. Feuille selon l'une des revendications 1 à 9, **caractérisée en ce qu'**elle contient en outre une quantité comprise entre 0,1 et 1% en masse d'un agent stabilisant vis-à-vis de l'hydrolyse choisi dans le groupe contenant les stéarates alcalins/alcalino-terreux, et/ou les carbonates alcalins/alcalino-terreux, ou bien une quantité de 0,05 à 0,6% en masse, plus particulièrement de 0,1 à 0,3% en masse, d'un agent stabilisant vis-à-vis de l'hydrolyse choisi dans le groupe des agents stabilisants phénoliques ayant une masse molaire de plus de 500 g/mol, en particulier le pentaérythrityl-tetrakis-3-(3,5-di-tertiobutyl-4-hydroxyphényl)-propionate ou le 1,3,5-triméthyl-2,4,6-tris(3,5-di-tertiobutyl-4-hydroxybenzyl)-benzole.

11. Feuille selon l'une des revendications 1 à 10, **caractérisée en ce qu'**elle contient, à titre de composés phosphorés organiques, des polyphosphates d'ammonium à longue chaîne encapsulés, ou des acides carboxyphosphiniques ou leurs anhydrides et, à côté des agents stabilisateurs vis-à-vis de l'hydrolyse, de 0,01 à 5,0% en masse de 2-(4,6-diphényl-1,3,5-triazine-2-yl)-5-(hexyl)oxyphénol ou de 0,01 à 5,0% en masse de 2,2-méthylène-bis(6-(2H-benzotriazol-2-yl)-4-(1,1,2,2-tétraméthylpropyl)-phénol ou un mélange de ces agents stabilisants vis-à-vis des UV, ou des mélanges d'au moins un de ces agents stabilisants vis-à-vis des UV avec d'autres agents stabilisants vis-à-vis des UV, de telle façon que la quantité globale en agents stabilisants vis-à-vis des UV soit comprise entre 0,01 et 5,0% en masse par rapport à la masse de polyéthylène téréphtalate cristallisable.

12. Feuille selon l'une des revendications 1 à 11, **caractérisée en ce que** sa brillance de surface, mesurée selon la norme DIN 67530 (angle de mesure : 20°) est supérieure à 100, de préférence supérieure à 120, **en ce que** sa transmission à la lumière L, mesurée selon la norme ASTM D 1003, est supérieure à 80%, de préférence supérieure à 82%, et **en ce que** sa turbidité, mesurée selon la norme ASTM S 1003, est inférieure à 20% et, de préférence, inférieure à 15%.

13. Procédé de préparation d'une feuille transparente difficilement inflammable, stable vis-à-vis des UV, selon l'une des revendications 1 à 12, par un procédé d'extrusion dans un train d'extrusion, **caractérisé en ce que** l'agent ignifugeant, éventuellement avec l'agent stabilisant vis-à-vis de l'hydrolyse, est introduit selon la technologie de mélange maître (Masterbatch), l'agent ignifugeant étant bien dispersé dans un matériau support solide, tel que le thermoplastique lui-même, le polyéthylène téréphtalate, ou un autre polymère compatible avec le thermoplastique.

14. Procédé selon la revendication 13, **caractérisé en ce qu'**un agent stabilisant vis-à-vis des UV est en outre introduit selon la technologie du mélange maître (Masterbatch), ledit agent stabilisant vis-à-vis des UV étant bien dispersé dans un matériau support solide tel qu'une résine, le thermoplastique lui-même, du polyéthylène téréphtalate, ou un autre polymère compatible avec le thermoplastique.

15. Procédé selon la revendication 13 ou 14, **caractérisé en ce que** la granulométrie et la masse volumique du mélange maître sont choisis proches de la granulométrie et de la masse volumique du thermoplastique.

16. Procédé selon l'une des revendications 13 à 15, **caractérisé en ce que** le mélange maître, qui contient l'agent ignifugeant et l'agent stabilisant vis-à-vis de l'hydrolyse est préalablement cristallisé ou préalablement séché, le

mélange maître étant introduit depuis un récipient doseur, selon le mélange souhaité, avec le thermoplastique et, éventuellement, d'autres matières premières vers un sécheur sous vide, qui met en oeuvre au cours du séchage ou du temps de séjour un spectre de températures allant de 20 à 130°C, et où le mélange de matières premières est agité à raison de 10 à 70 tours/minute pendant les 2 à 4 heures de temps de séjour.

**17.** Procédé selon l'une des revendications 13 à 16, **caractérisé en ce que** le mélange de matières premières préalablement cristallisé ou préalablement séché est ensuite séché ultérieurement à une température dans une gamme allant de 100 à 170°C dans un récipient, en amont, également sous vide.

**18.** Utilisation d'une feuille selon l'une des revendications 1 à 12, fabriquée selon un procédé des revendications 13 à 17, pour le revêtement d'articles d'intérieur, pour des constructions de foires, pour des articles de foire, à titre d'affichage, pour des enseignes, pour des vitrifications de protection de machines et d'outils, dans le secteur de l'éclairage, dans la construction de boutiques et de rayonnages, à titre d'articles publicitaires, à titre de moyens de camouflage, pour des serres, pour des toitures, pour des revêtements d'extérieur, pour des bâches et pour des utilisations dans le secteur de la construction, comme des enseignes publicitaires lumineuses, des pare-soleil, ou dans des applications électriques.